# EUROPÄISCHE PATENTSCHRIFT

(11) **EP 1 863 998 B1**
(45) Veröffentlichungstag und Bekanntmachung des Hinweises auf die Patenterteilung: **13.01.2016**
(21) Anmeldenummer: 06708648.8
(22) Anmeldetag: 06.03.2006
(51) Int. Cl.: E05F 15/60, E05F 11/50, F16D 7/02, F16H 1/20, F16D 41/20, E05F 15/697

(54) **GETRIEBE-ANTRIEBSEINHEIT MIT EINER LASTDREHMOMENTSPERRE**
TRANSMISSION DRIVE UNIT COMPRISING A LOAD TORQUE LOCK
UNITÉ D'ENTRAÎNEMENT D'ENGRENAGE DOTÉE D'UN DISPOSITIF DE BLOCAGE DE COUPLE DE CHARGE

(30) Priorität: 21.03.2005 DE 102005012938
(43) Veröffentlichungstag der Anmeldung: 12.12.2007
(73) Patentinhaber: ROBERT BOSCH GMBH, 70442 Stuttgart (DE)
(72) Erfinder: LAMPERT, Rico, 48331 Farmington Hills (US); HUCK, Thomas, 77836 Rheinmuenster (DE); MOENCH, Jochen, 76547 Sinzheim (DE); BUEYUEKASIK, Diyap, 77815 Buehl (DE); MILI, Tarek, 76133 Karlsruhe (DE)
(86) Internationale Anmeldenummer: PCT/EP2006/060476
(87) Internationale Veröffentlichungsnummer: WO 2006/100174

(56) Entgegenhaltungen:
- EP-A- 0 012 250
- EP-A- 0 052 721
- DE-U1- 20 313 273
- US-A- 2 324 145

## Beschreibung

### Stand der Technik

Die Erfindung betrifft eine Getriebe-Antriebseinheit mit einer Lastdrehmomentsperre, insbesondere einen Fensterheberantrieb nach der Gattung des unabhängigen Anspruchs 1.

Mit der DE 197 53 106 C2 ist eine Lastdrehmomentsperre bekannt geworden, die in einem Antriebsstrang eingebaut ist und beim Stillstand des Antriebs selbstständig die vom Abtrieb eingeleiteten Drehmomente sperrt. Die von der Antriebsseite eingeleiteten Drehmomente hingegen werden in beiden Drehrichtungen übertragen. Hierzu wird eine Antriebswelle von den Anbauteilen einer Abtriebswelle durchdrungen. Zwischen diesen beiden gegeneinander verdrehbaren Wellen sind radiale Stege, sowie Klemm- bzw. Sperrelemente angeordnet, die in Abhängigkeit von der antriebsseitigen oder abtriebsseitigen Einleitung der Drehmomente eine Drehung gegenüber einer Klemmringeinheit zulassen oder blockieren. Eine solche Lastdrehmomentsperre besteht aus einer Vielzahl von Einzelteilen, die aufwendig zu montieren sind und viel Bauraum beanspruchen.

Die EP0012250A1, die EP0052721 A1 und die DE20313273 U1 zeigen Getriebe-Antriebseinheiten, die jeweils Spiralfedern aufweisen, die als Drehmomentsperre zwischen Getriebebauteilen angeordnet sind.

### Vorteil der Erfindung

Die erfindungsgemäße Getriebe-Antriebseinheit mit der Lastdrehmomentsperre mit den kennzeichnenden Merkmalen des unabhängigen Anspruchs 1 hat den Vorteil, dass durch die Verwendung einer Schlingfeder, die auf einer drehfesten Welle oder innerhalb einer Hohlwelle angeordnet ist, eine sichere Fixierung eines beweglichen Teils bei abgeschaltener Getriebe- Antriebseinheit geschaffen wird. Durch die große Anlagefläche der spiralförmigen Schlingfeder an der Oberfläche der Welle ist auch beim Auftreten von Vibrationen ein sicheres Sperren gegenüber dem Einwirken eines abtriebsseitigen Drehmoments gewährleistet. Eine solche Schlingfeder-Sperre hat ein äußerst geringes Gewicht und kann sehr platzsparend in das Getriebe der Abtriebseinheit integriert werden. Dadurch, dass die Schlingfeder-Sperre nicht direkt in der Rotorwelle des Elektromotors oder zwischen der Rotorwelle und einem ersten Getriebeelement angeordnet ist, wird die Verzahnung der Rotorwelle und die mit dieser Verzahnung kämmende korrespondierende Verzahnung eines ersten Getriebeelementes entlastet, wodurch insbesondere Ausfälle - verursacht durch eine sogenannten Kriechtest - verhindert werden können. Bei diesem Test wird der Antrieb bei hoher Temperatur über sehr lange Zeit einer konstanten hohen abtriebsseitigen Belastung ausgesetzt, wodurch sich bestimmte, aus Kunststoff gefertigte Getriebebauteile verformen können. Durch die Anordnung der Schlingfeder und dem Getriebezahnrad auf einer feststehenden Welle wird diese hohe Dauerbelastung von der drehfesten Welle aufgenommen, wodurch die erste antriebsseitige Getriebestufe der Rotorwelle vor einer Beschädigung geschützt wird.

Durch die in den Unteransprüchen aufgeführten Maßnahmen ergeben sich vorteilhafte Weiterbildungen und Verbesserungen der in Anspruch 1 angegebenen Merkmale. Da sowohl das über die Rotorwelle angetriebene Getriebezahnrad, als auch das Kupplungselement zusammen mit der Schlingfeder auf oder in der gehäusefesten Welle angeordnet ist, ist die Drehmomentsperre besonders kompakt ausgebildet. Da das Kupplungselement mit einem Fortsatz in eine entsprechende Ausformung des Getriebezahnrades eingreift, wird das antriebsseitige Drehmoment unter geringen Reibungsverlusten über das Kupplungselement an das Abtriebsrad übertragen.

In einer bevorzugten Ausgestaltung ist die Schlingfeder besonders platzsparend zwischen dem Getriebezahnrad und dem Kupplungselement angeordnet. Bei einer axialen Anordnung dieser beiden Bauteile kann der Fortsatz des Kupplungselementes besonders günstig axial zwischen die Enden der Schlingfeder eingreifen, um das Getriebe bei einer abtriebsseitigen Belastung zu sperren.

Gemäß einer weiteren Ausführung ist das Getriebezahnrad auf dem Umfang des Kupplungselementes gelagert und innerhalb der Schlingfeder angeordnet, die in einer Hohlwelle anliegt. Dabei kann die Hohlwelle besonders günstig als Teil des Getriebegehäuses ausgebildet sein.

Weist die Getriebe-Antriebseinheit ein Schneckengetriebe auf, kann dieses mit einem sehr hohen Wirkungsgrad ausgestattet werden, da das Schneckengetriebe keine Selbsthemmung aufzuweisen braucht. Auf Grund dieses erhöhten Wirkungsgrads, kann entsprechend die Leistung des Antriebsmotors reduziert werden, wodurch Gewicht und Bauraum, sowie die Herstellungskosten verringert werden.

Ist beispielsweise das Getriebezahnrad als Schneckenrad ausgebildet, das von einer auf der Rotorwelle angeformten Schnecke angetrieben wird, ist diese Schneckenverzahnung auch bei Einwirken einer sehr hohen abtriebsseitigen Dauerbelastung zuverlässig vor einer Beschädigung geschützt.

Dabei kann an dem Getriebezahnrad mittels einfacher Änderungen einer Aussparung angeformt werden, in die die radial von der Welle abstehenden Enden der Schlingfeder hineinragen. Dadurch wird die Spiralfeder, die unter geringer Pressung auf oder in der feststehenden Welle gelagert ist, unter geringer Reibung mit dem Getriebezahnrad gegenüber der Welle mitgedreht.

Hierzu weist das Getriebezahnrad am Rand der Aussparung jeweils in Umfangsrichtung einen Anschlag auf, der bei Übertragen eines Antriebsmomentes ein radial abstehendes Ende der Schlingfeder gegen das Kupplungselement presst und dieses bezüglich der feststehenden Welle in Drehung versetzt. Zur Sperrung des abtriebsseitigen Drehmomentes ist der Fortsatz des Kupplungselementes bezüglich der Umfangsrichtung zwischen den Enden der Schlingfeder angeordnet. Wird das Kupplungselement vom Abtriebselement in Drehung versetzt, wird ein radial abstehendes Ende der Schlingfeder gegenüber der feststehenden Welle verdreht, so dass sich die Schlingfeder gegenüber der Welle verspannt und dadurch das Getriebe sperrt. Durch diese Anordnung sind alle Getriebebauteile, die zwischen dem Getriebezahnrad und dem Elektromotor liegen vor einer abtriebsseitigen Krafteinwirkung geschützt.

Weist das Getriebezahnrad oder das Kupplungselement ein Ringelement auf, das sich über einen axialen Bereich ausdehnt sich zumindest über einen Teil des Umfangs erstreckt, kann das Getriebezahnrad und das Kupplungselement derart axial ineinander geschoben werden, dass Kippkräfte gegenüber der Wellenachse besser abgestützt werden. Dabei kann sowohl die radiale Wandfläche, als auch die Stirnfläche der Ringelemente zur radialen und/oder axialen Abstützung dienen.

Besonders kostengünstig werden das Getriebezahnrad und das Kupplungselement als einstückige Kunststoff-Spritzgussteile ausgebildet, wobei der Fortsatz und die korrespondierende Aussparung, sowie gegebenenfalls die Ringelemente sehr kostengünstig angeformt werden können. Wird dabei das Kupplungselement relativ stabil ausgebildet, kann das Getriebezahnrad hingegen mit einer relativ geringen Festigkeitsauslegung ausgebildet werden, da auf dieses im Idealfall keine abtriebsseitigen Dauerlasten einwirken.

Weist das Kupplungselement und/oder das Getriebezahnrad einen teilweise oder vollständig geschlossenes Ringelement auf, kann dieses als Gehäuse für ein Schmiermittel-Depot ausgebildet werden. Dadurch ist die darin angeordnete Schlingfeder über deren gesamte Lebensdauer zuverlässig leichtgängig gelagert.

In einer weiteren Ausführung weisen das Kupplungselement und/oder das Getriebezahnrad einen axialen Anschlag auf, den die Schlingfeder anliegt. Dadurch entfällt eine zusätzlich axiale Fixierung der Schlingfeder.

Sind sowohl die Anschlagsflächen des Getriebezahnrads und/oder des Kupplungselements,
als auch die radial abstehenden Enden der Schlingfeder um einen geringen Winkel gegenüber der Wellenachse geneigt ausgebildet, werden beim Einwirken eines Drehmomentes das Getriebezahnrad und das Kupplungselement axial vorteilhaft zueinander hingezogen.

Erfindungsgemäß werden zur Erzielung einer Dämpfung die axialen Enden der Schlingfeder als in Umfangrichtung gebogene Federelemente ausgebildet. Legt sich nun bei Einwirken eines großen abtriebsseitigen Drehmoments die Anschlagsfläche des Kupplungselementes an das Ende der Schlingfeder an, wird dieses elastisch verformt, wodurch der Stoß abgedämpft wird.

### Zeichnungen

In den Zeichnungen sind verschiedene Ausführungsbeispiele einer erfindungsgemäßen Getriebe-Antriebseinheit dargestellt und in der nachfolgenden Beschreibung näher erläutert. Es zeigen
Figur 1 einen Schnitt durch eine erfindungsgemäße Getriebe- Antriebseinheit,
Figur 2 eine erfindungsgemäße Lastdrehmomentsperre gemäß Figur 1,
Figur 3 und 4 eine weitere Variation einer Lastdrehmomentsperre in Explosionsdarstellung,
Figur 5 einen Schnitt durch die zusammen gebaute Lastdrehmomentsperre gemäß Figur 4,
Figur 6 eine schematische Darstellung eines Ausschnitts aus Figur 4,
Figur 7 eine weitere Variation einer Lastdrehmomentsperre, sowie
Figur 8 und 9 zwei Varianten einer Schlingfeder in verschiedenen Darstellungen.

### Beschreibung

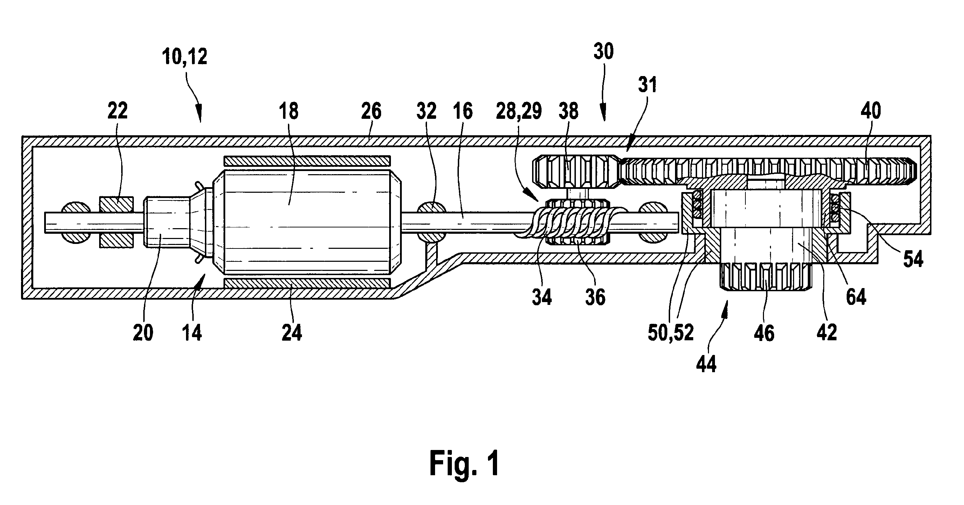

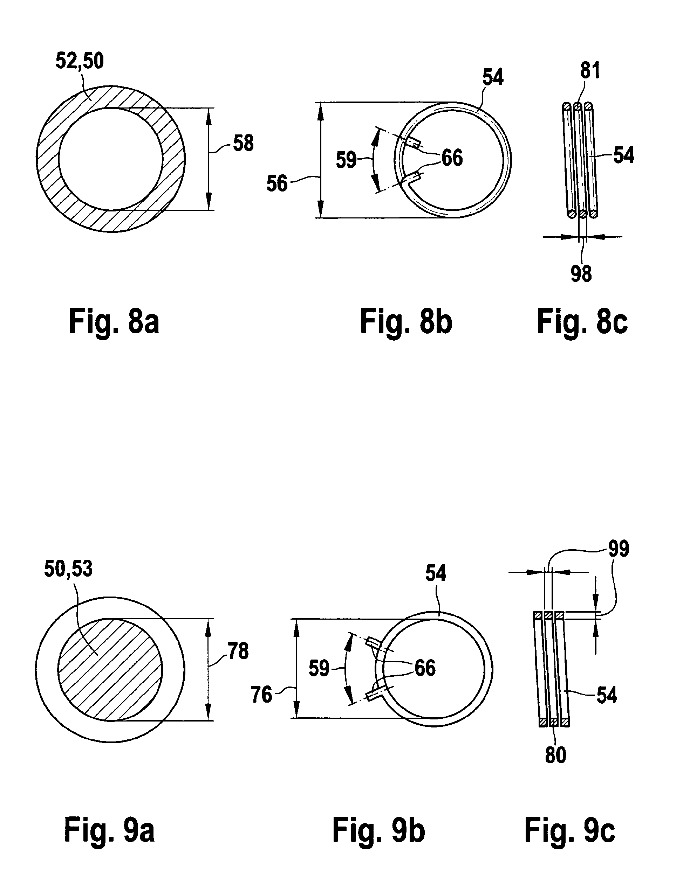

In Figur 1 ist als Getriebe- Antriebseinheit 10 ein Fensterheberantrieb 12 dargestellt. Die Getriebe- Antriebseinheit 10 weist einen Elektromotor 14 mit einer Rotorwelle 16 auf, auf der ein Ankerpaket 18, ein Kollektor 20, sowie ein Ringmagnet 22 zur Positionserfassung angeordnet sind. Der Elektromotor 14 wird mittels Permanentmagneten 24 angetrieben, die in einem Gehäuse 26 angeordnet sind, das sowohl den Elektromotor 14 als auch ein von diesem angetriebenes Getriebe 30 umschließt. Auf der Rotorwelle 16, die mittels mehrerer Lager 32 im Gehäuse 26 gelagert ist, ist eine Schnecke 34 angeordnet, die zusammen mit einem Schneckenrad 36 als eine erste Getriebestufe 29 ein Schneckengetriebe 28 bilden. Das Schneckengetriebe 28 im Ausführungsbeispiel weist keine Selbsthemmung auf, sondern eine Verzahnung, die bezüglich eines hohen Wirkungsgrads optimiert ist. Das Schneckenrad 36 ist drehfest mit einem Stirnzahnrad 38 verbunden, das in einer zweiten Getriebestufe 31 mit einem weiteren Getriebezahnrad 40 kämmt. Das Getriebezahnrad 40 bildet zusammen mit einem Kupplungselement 42 eine Lastdrehmomentsperre 44, wobei das Kopplungselement 42 direkt als Abtriebsritzel 46 ausgebildet, oder mit einem solchen wirkverbunden ist. Über das Abtriebselement 46 wird das Antriebsmoment vom Elektromotor 14 auf einer nicht näher dargestellten Mechanik oder Kinematik eines Fensterhebers übertragen, wodurch als bewegliches Teil eine Fensterscheibe verstellt wird. In einer alternativen Ausführung ist das Kupplungselement 42 beispielsweise als Seiltrommel 48 ausgebildet oder direkt mit einer solchen Seiltrommel 48 verbunden, die über einen Seilzug das bewegliche Teil verstellt. Zur Ausbildung der Lastdrehmomentsperre 44 sind das Getriebezahnrad 40 und das Kupplungselement 42 in einer drehfesten Welle 50 angeordnet, die als Hohlwelle 52 ausgebildet ist und drehfest mit dem Gehäuse 26 verbunden ist. Innerhalb der Welle 50 ist als Reibelement eine Schlingfeder 54 angeordnet, deren Außendurchmesser 56 in entspanntem Zustand geringfügig größer ist, als der Innendurchmesser 58 der Hohlwelle 52. Eine solche Schlingfeder 54 zur Anordnung in einer Hohlwelle 52 ist beispielsweise in Figur 8 detaillierter dargestellt. In Figur 1 weist die Hohlwelle 52 einen Bund 53 auf, an dem sowohl das Getriebezahnrad 40 als auch das Kupplungselement 42 zu deren axialer Führung anliegen.

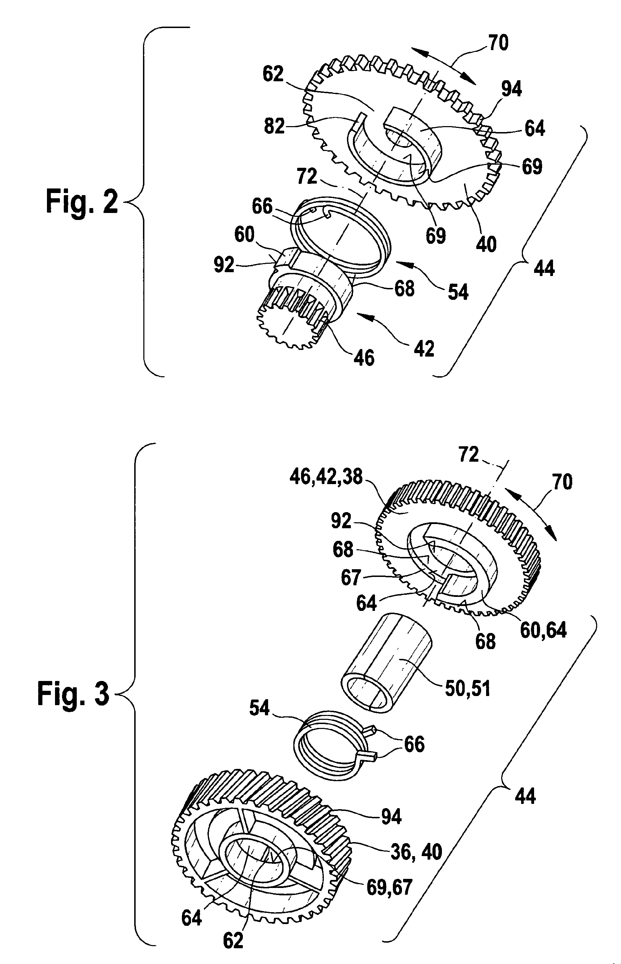

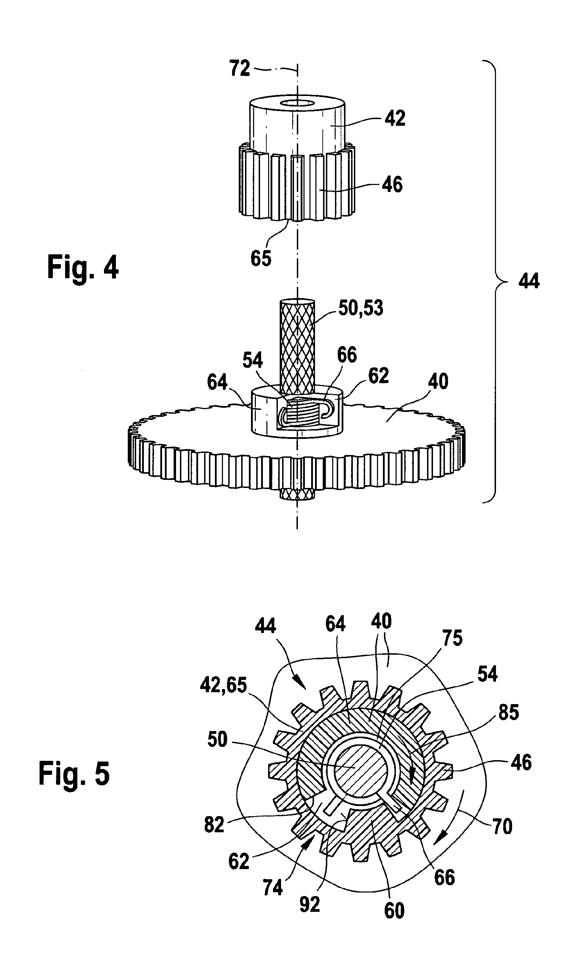

In Figur 2 sind die einzelnen Komponenten 40, 42, 54 der Lastdrehmomentsperre 44 ohne die Hohlwelle 52 vergrößert als Explosionszeichnung dargestellt. Das Kupplungselement 43 weist einen Fortsatz 60 auf, der in montiertem Zustand in eine entsprechende Aussparung 62 des Getriebezahnrads 40 eingreift. Die Aussparung 62 wird von einem Ringelement 64 gebildet, das in axialer Richtung an das Getriebezahnrad 40 angeformt ist. Das Ringelement 64 ist dabei nicht vollständig geschlossen, sondern als Ringsegment 64 ausgebildet, da die Aussparung 62 über einen bestimmten Winkelbereich ausgeschnitten ist. Die Schlingfeder 54, die in montiertem Zustand spiralförmig an der Innenwand der Hohlwelle 52 anliegt, weist zwei Enden 66 auf, die sich näherungsweise in radialer Richtung erstrecken. Diese beiden Enden 66 greifen in die Aussparung 62, wobei sich der Fortsatz 60 ebenfalls radial erstreckt und bezüglich der Umfangsrichtung 70 zwischen den beiden Enden 66 angeordnet ist. Das Kupplungselement 42 stützt sich im eingebauten Zustand radial am Ringelement 64 des Getriebezahnrads 40 ab und liegt mit einer Stirnfläche 68 axial an einer strinseitigen Gegenfläche 69 des Getriebezahnrad 40 an, so dass ein Verkippen des Kupplungselementes 42 gegenüber der Wellenachse 72 weitgehend verhindert wird. Die Wirkungsweise der Drehlastmomentsperre 44 wird weiter unten ausführlich anhand des Ausführungsbeispiels gemäß Figur 4 bis Figur 6 erläutert.

Figur 3 zeigt ein weiteres Ausführungsbeispiel einer erfindungsgemäßen Lastdrehmomentsperre 44, wobei hier die Schlingfeder 54 nicht innerhalb einer Hohlwelle 52, sondern auf einer Welle 50 angeordnet ist, die hier als eine Hülse 51 ausgebildet ist. Eine solche Lastdrehmomentsperre 44 könnte in der Getriebe-Antriebseinheit 10 gemäß Figur 1 beispielsweise direkt nach dem Schneckengetriebe 28 (erste Getriebestufe 29) angeordnet sein. Dann würde das Getriebezahnrad 40 der Drehmomentsperre 44 als Schneckenrad 36 ausgebildet sein, in das als Kupplungselement42 beispielsweise das Stirnzahnrad 38 eingreift. An das Kupplungselement 42, 38 könnte sich gemäß Figur 1 eine weitere Getriebestufe anschließen, oder beispielsweise ein Abtriebsritzel 46 zum Verstellen eines beweglichen Teils bilden. Das Kupplungselement 42 weist wieder einen Fortsatz 60 auf, der sich in diesem Fall in axialer Richtung 72 erstreckt und in die korrespondierende Aussparung 62 im Ringelement 64 des Getriebezahnrads 40 eingreift. Die Schlingfeder 54 ist in montiertem Zustand mit leichter Vorspannung auf der Welle 50 angeordnet, wobei der Innendurchmesser 76 der Schlingfeder 54 geringfügig kleiner ist, als der Außendurchmesser 78 der Welle 50. Die Schlingfeder 54 ist bei dieser Ausführung aus einem Draht mit viereckigem Querschnitt hergestellt, und entspricht der vergrößerten Darstellung der Schlingfeder 54 in Figur 9.

Die Schlingfeder 54 weist wiederum zwei Enden 66 auf, die sich von der Welle 50 radial nach außen erstrecken und in die Aussparung 62 des Getriebezahnrads 40 eingreifen. In diesem Ausführungsbeispiel weisen sowohl das Kupplungselement 42, als auch das Getriebezahnrad 40 Ringelemente 64 auf, die als Ringsegmente 64 ausgebildet sind und jeweils in axiale Vertiefungen 67 am Getriebezahnrad 40 und am Kopplungselement 42 eingreifen um eine radiale und axiale Abstützung zu gewährleisten. Dadurch ist die Schlingfeder 54 in montiertem Zustand axial zwischen dem Kupplungselement 42 und dem Getriebezahnrad 40 innerhalb der Ringsegmente 64 angeordnet. Dadurch lassen sich das Kupplungselement 42 und das Getriebezahnrad 40 axial sehr nahe zusammenschieben, sodass die Lastdrehmomentsperre 44 nur einen sehr geringen Bauraum beansprucht. Das Kupplungselement 42 und das Getriebezahnrad 40 sind wie bei der Ausführung gemäß Figur 2 jeweils einstückig aus Kunststoff hergestellt, so dass deren Herstellungskosten äußerst gering sind.

Figur 4 zeigt eine weitere Variation einer Lastdrehmomentsperre 44, bei der das Getriebezahnrad 40, das Kupplungselement 42, sowie die Schlingfeder 54 auf einer Welle 50 angeordnet sind, die beispielsweise als Metallbolzen 53 mittels einer Rändelung in das Getriebegehäuse 26 aus Kunststoff drehfest eingespritzt oder eingepresst ist. Am Getriebezahnrad 40 ist in axialer Richtung 72 wieder ein Ringsegment 64 mit der Aussparung 62 angeformt, in das die Enden 66 der Schlingfeder 54 radial eingreifen. Das Kupplungselement 42 weist einen komplett geschlossenen Ring 65 auf, an den radial nach innen der Fortsatz 60 angeformt ist, der radial in die Aussparung 62 des Getriebezahnrades 40 eingreift, wie dies in einem Querschnitt durch die zusammengebaute Lastdrehmomentsperre 44 in Figur 5 zu erkennen ist. Der geschlossene Ring 65 des Kupplungselementes 42 stützt sich am Ringelement 64 des Getriebezahnrades 40 ab und bildet somit eine geschlossene Kapselung 74 für die Schlingfeder 54. Diese Kapselung 74 kann beispielsweise mit Schmiermittel befüllt werden, so dass die Schlingfeder 54 über deren gesamte Lebensdauer gut gleitend gelagert ist.

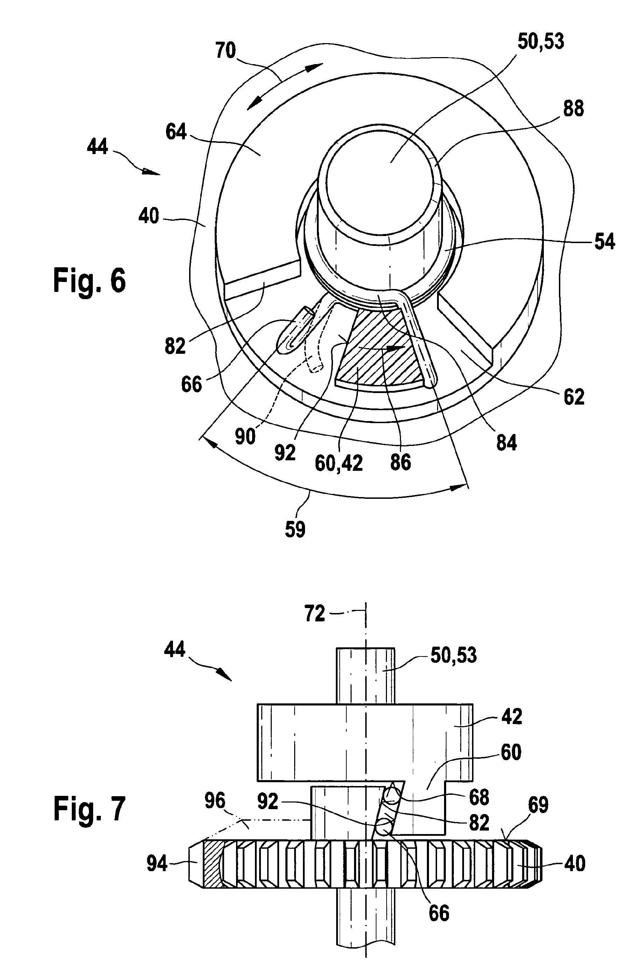

Das Wirkprinzip der erfindungsgemäßen Getriebe-Antriebseinheit 10 wird im Folgenden anhand der schematischen Darstellung der Lastdrehmomentsperre 44 gemäß Figur 6 erläutert. Wird von dem Elektromotor 14 antriebsseitiges Moment 85, das durch den Pfeil 85 dargestellt ist, auf das Getriebezahnrad 40 eingeleitet, dreht sich dieses in Umfangrichtung 70 bis es mit einem Anschlag 82 an einem der Enden 66 der Schlingfeder 54 anliegt und dann die Schlingfeder 54 gegen einen geringen Reibwiderstand durch deren Vorspannung gegen den Fortsatz 60 des Kupplungselementes 42 presst. Dadurch wird das eingeleitete Drehmoment auf das Kupplungselement 42 übertragen, wodurch sich das Getriebezahnrad 40 zusammen mit der Schlingfeder 54 und dem Kopplungselement 42 auf der Welle 50 drehen und das Antriebsmoment an das Abtriebselement 46 weiterleiten. Die Enden 66 der Schlingfeder 54 sind in Figur 6 derart angeformt, dass sich im Umfangsbereich 59 zwischen den beiden Enden ein zusätzlicher Wicklungsabschnitt 84 der Spiralfeder 54 angeordnet ist. Wird daher eines der Enden 66 durch einen der Anschläge 82 des Getriebezahnrades 40 zum zweiten Ende 66 hingedreht, löst sich die Federspannung, so dass das Antriebsmoment mit geringen Reibungsverlusten auf das Kupplungselement 42 übertragen werden kann. Dieser antriebsseitige Antriebs-Zustand ist beispielsweise im Querschnitt in Figur 5 dargestellt, und erfolgt in beide Drehrichtungen des Getriebezahnrades 40 nach dem selben Prinzip. Wird hingegen ein abtriebsseitiges Moment auf das Kupplungselement 42 eingeleitet, dessen Fortsatz 60 zwischen den beiden Enden 66 angeordnet ist, bewirkt eine Verdrehung des Fortsatzes 60 gegen eines der beiden Enden 66 jeweils ein Zuziehen der Schlingfeder 54, wodurch das Getriebe 30 gesperrt wird. Das von einem Abtriebselement 46 eingeleitete abtriebsseitige Drehmoment ist durch den Pfeil 86 in Figur 6 dargestellt, wobei die Lastdrehmomentsperre 44 prinzipiell bezüglich beider Drehrichtungen des abtreibseitigen Drehmoments gleich funktioniert.

Die Welle 50 weist an ihrer Stirnseite eine Phase 88 auf, die das Aufbringen der Schlingfeder 54 mit geringer Vorspannung auf der Welle 50 erleichtert. In einer weiteren Variation, die in Figur 6 gestrichelt dargestellt ist, sind die Enden 66 der Schlingfeder 54 als Dämpfungselemente 90 ausgebildet, die beispielsweise zum Fortsatz 60 hin gegenüber der Radialrichtung gebogen ausgebildet sind. Dadurch wird ein abrupter Stopp des anzutreibenden Teils abgefedert, wodurch eine Beschädigung des Getriebes 30 verhindert wird.

In einer weiteren Variante gemäß Figur 7 sind die Enden 66 der Schlingfeder 54 gegenüber der Wellenachse 72 geneigt angeordnet. Die Anschläge 82 des Getriebezahnrades 40 und Anschlagsflächen 92 des Kupplungselementes 42 sind entsprechend geneigt ausgebildet, so dass beim Einwirken eines antriebsseitigen oder eines abtriebsseitigen Moments 85, 86 auf die Lastdrehmomentsperre 44 das Getriebezahnrad 40 und das Kupplungselement 42 jeweils axial zueinandergezogen werden. Dadurch wird verhindert, dass sich beim Auftreten hoher einwirkender Drehmomente 85, 86 das Getriebezahnrad 40 und Kupplungselement 42 axial aus ihrer Fixierung lösen. Dies ist insbesondere dann von Bedeutung, wenn das Getriebezahnrad 40 beispielsweise keine radiale Verzahnung 94 aufweist, sondern beispielsweise eine Verzahnung 96 an der axialen Seite des Getriebezahnrads 40 aufweist. Ist die axiale Verzahnung 96 des Getriebezahnrads 40 zum Kupplungselement 42 hin angeordnet, kann das Getriebe 30 beispielsweise besonders flach bauend ausgebildet werden.

In Figur 8 ist die Schlingfeder 54 dargestellt, wie sie gemäß Figur 2 für die Anordnung innerhalb einer Hohlwelle 52 geeignet ist. Zur Erzeugung einer Vorspannung ist der Außendurchmesser 56 der spiralförmigen Schlingfeder 54 geringfügig größer, als der Innendurchmesser 58 der Hohlwelle 52. Die Schlingfeder 54 ist hier mit einem Draht mit einem kreisförmigen Querschnitt 81 hergestellt, der beispielsweise einen Durchmesser 98 von ca. 0,8 mm aufweist. Die Enden 66 stehen hierbei radial mit der Hohlwelle 52 nach innen ab, so dass in den Winkelbereich 59 zwischen den beiden Enden 66 der Fortsatz 60 eingreifen kann. Im Gegensatz zu Figur 6 überlappen die beiden Enden 66 in Figur 8 nicht, so dass die Verspannung der Schlingfeder 54 innerhalb der Hohlwelle 52 zu einer Sperrung des Getriebes 30 führt, sobald der innerhalb der Schlingfeder 54 angeordnete Fortsatz 60 des Kupplungselements 42 gegen eines der Enden 66 drückt, wie dies in der Ausführung gemäß Figur 2 dargestellt ist.

Figur 9 zeigt eine weitere Variante einer Schlingfeder 54 zum Aufschieben auf eine Welle 50 und einen Wellenzapfen, wobei deren Außendurchmesser 78 geringfügig größer ist, als der Innendurchmesser 76 der Schlingfeder 54. Die Spiralfeder 54 ist hierbei aus einem Draht mit viereckigem Querschnitt 80 gefertigt, wodurch sich die Anlagefläche der Schlingfeder 54 an der Oberfläche der Welle 50 erhöht. Der Durchmesser 78 der Welle 50 beträgt beispielsweise 6 bis 10 mm, der viereckige Querschnitt 80 des Drahts beispielsweise 1x1mm. Im Gegensatz zur Schlingfeder 54 in Figur 6 ist hier zwischen den beiden Enden 66 kein zusätzliches überlappendes Wicklungssegment 84 angeordnet, so dass hier die Drehlastmomentsperre 44 sperrt, wenn die beiden Enden 66 in Umfangsrichtung 70 zusammengedrückt werden. Das bedeutet, dass hier der Fortsatz 60 nicht im Bereich 59 zwischen den beiden Enden 66, sondern außerhalb dieses Bereichs 59 angeordnet wird. Hingegen sind die Anschläge 82 des Getriebezahnrades 40 im Winkelbereich 59 zwischen den beiden Enden 66 angeordnet, um das Antriebsmoment vom Elektromotor 14 mittels einer Drehung der Schlingfeder 54 und dem Kupplungselement 42 um die Welle 50 zu übertragen. Die exakte Auslegung einer solchen Schlingfeder 54 und die Anpassung auf die entsprechende Getriebe-Antriebseinheit 10 wird nach allgemein bekannten Verfahren vorgenommen, wobei sich beispielsweise die Eytelwein'sche Berechnung nach dem Seilreibungsgesetz als praktisch erwiesen hat.

Es sei angemerkt, dass hinsichtlich der in allen Figuren gezeigten Ausführungsbeispiele und der Beschreibung vielfältige Kombinationsmöglichkeiten der einzelnen Merkmale untereinander möglich sind. So kann beispielsweise die Schlingfeder 54 bezüglich ihrer geometrischen Ausformung und ihrer Materialbeschaffenheit beliebig variiert werden, und beispielsweise eine Ummantelung aufweisen, die die Reibung gegenüber der Oberfläche der Welle 50 beeinflusst. Ebenso kann die Anzahl der Wicklungen und die Anordnung und Ausformung der Enden 66 entsprechend angepasst werden. Die Anordnung der erfindungsgemäßen Lastdrehmomentsperre 44 innerhalb des Getriebes 30 kann ebenfalls variiert werden, wobei eine Anordnung zwischen dem letzten Getriebezahnrad 40 und der Abtriebskupplung 42 besonders günstig ist, um die antriebsseitigen Getriebestufen 29, 31 vor einer übermäßigen Belastung zu schützen. Das Getriebezahnrad 40 der Lastdrehmomentsperre 44 kann dabei als Schraub-, Stirn-, Kron-, oder Schneckenrad ausgebildet sein, das Kupplungselement 42 direkt als Abtriebselement 46 oder als ein mit diesem wirkverbundenen Mitnehmerelement ausgebildet sein. Ebenso kann die konkrete Ausformung der Welle 50 in Abhängigkeit der Ausformung der Schlingfeder 54, des Getriebezahnrades 40 und des Kupplungselementes 42 in vielfältiger Weise variiert werden, insbesondere auch als Hohlwelle 52 ausgebildet sein. Die Ausgestaltung der Aussparung 62 des Getriebezahnrades 40 und des Fortsatzes 60 des Kopplungselementes 42 sollen ebenfalls in zu übertragenden Momenten und dem Bauraum angepasst werden, wobei die Anordnung der Aussparung 62 auf dem Kupplungselement und der Fortsatz 60 auf dem Getriebezahnrad 40 als gleich wirkend zu betrachten ist, da es bezüglich der Erfindung auf das Kraftübertragende ineinander greifen der Bauteile 40, 42 ankommt. Bevorzugt wird die Getriebe-Antriebseinheit 10 zum Verstellen beweglicher Teile, wie beispielsweise einer Scheibe, einem Schiebedach oder einer Antriebskomponente im Kraftfahrzeug verwendet.

## Patentansprüche

1. Getriebe-Antriebseinheit (10) mit einem Elektromotor (14), der ein Getriebe (30) antreibt und mit einer Lastdrehmomentsperre (44), die die von einem abtriebsseitigen Kupplungselement (42) eingeleiteten Drehmomente (86) sperrt, wobei die Lastdrehmomentsperre (44) eine Schlingfeder (54) aufweist, die auf/in einer drehfesten Welle (50, 52) angeordnet ist, und die Schlingfeder (54) in ein antriebsseitig von einer Rotorwelle (16) des Elektromotors (14) angetriebenes Getriebezahnrad (40) eingreift, **dadurch gekennzeichnet, dass** die Enden (66) der Schlingfeder (54) in Umfangsrichtung (70) derartig geformt sind, dass sie federnde Dämpfelemente (90) bilden, die die Energie beim Blockieren des Kupplungselements (42) aufnehmen, das aufgrund eines plötzlichen Stopps eines mittels der Getriebe-Antriebseinheit (10) zu verstellenden Teils verursacht wird.

2. Getriebe-Antriebseinheit (10) nach Anspruch 1, **dadurch gekennzeichnet, dass** das Kupplungselement (42) auf/in der drehfesten Welle (50, 52) gelagert ist und mit einem axialen und/oder radialen Fortsatz (60) in eine korrespondierende Aussparung (62) des Getriebezahnrads (40) greift.

3. Getriebe-Antriebseinheit (10) nach einem der Ansprüche 1 oder 2, **dadurch gekennzeichnet, dass** die Schlingfeder (54) axial zwischen dem Kupplungselement (42) und dem Getriebezahnrad (40) angeordnet ist.

4. Getriebe-Antriebseinheit (10) nach einem der vorhergehenden Ansprüche, **dadurch gekennzeichnet, dass** das Getriebezahnrad (40) auf dem Kupplungselement (42) gelagert ist.

5. Getriebe-Antriebseinheit (10) nach einem der vorhergehenden Ansprüche, **dadurch gekennzeichnet, dass** das Getriebe (30) zumindest teilweise als Schneckengetriebe (28) ausgebildet ist und zumindest näherungsweise selbsthemmungsfrei ausgebildet ist und einen hohen Wirkungsgrad aufweist.

6. Getriebe-Antriebseinheit (10) nach einem der vorhergehenden Ansprüche, **dadurch gekennzeichnet, dass** das Getriebezahnrad (40) als Schneckenzahnrad (36) ausgebildet ist, das mit einer Schnecke (34) der Rotorwelle (16) kämmt.

7. Getriebe-Antriebseinheit (10) nach einem der vorhergehenden Ansprüche, **dadurch gekennzeichnet, dass** die Schlingfeder (54) spiralförmig um/in die drehfeste Welle (50, 52) gewickelt ist und Enden (66) aufweist, die radial von der Welle (50, 52) abstehen und in die Aussparung (62) des Getriebezahnrads (40) eingreifen.

8. Getriebe-Antriebseinheit (10) nach einem der vorhergehenden Ansprüche, **dadurch gekennzeichnet, dass** das Getriebezahnrad (40) mindestens einen Anschlag (82) bezüglich der Umfangsrichtung (70) aufweist, der beim Einwirken eines antriebsseitigen Drehmoments (85) zumindest eines der - Enden (66) derart gegen den Fortsatz (60) des Kupplungselements (42) presst, dass sich die Schlingfeder (54) mit dem Getriebezahnrad (40) und dem Kupplungselement (42) gegenüber der Welle (50, 52) dreht.

9. Getriebe-Antriebseinheit (10) nach einem der vorhergehenden Ansprüche, **dadurch gekennzeichnet, dass** der Fortsatz (60) des Kupplungselements (42) axial und/oder radial zwischen die Enden (66) der Schlingfeder (54) eingreift und beim Einwirken eines abtriebseitigen Drehmoments (86) zumindest eines der Enden (66) derart gegenüber die Welle (50, 52) verdreht, dass sich die Schlingfeder (54) gegen die Welle (50, 52) verspannt und das abtriebsseitig einwirkende Drehmoment (86) sperrt.

10. Getriebe-Antriebseinheit (10) nach einem der vorhergehenden Ansprüche, **dadurch gekennzeichnet, dass** sich das Kupplungselement (42) und das Getriebezahnrad (40) gegenseitig axial und/oder radial abstützen, wobei hierzu am Kupplungselement (42) und/oder am Getriebezahnrad (40) insbesondere ein Ringelement (64, 65) angeformt ist, das axial und/oder radial am Getriebezahnrad (40) oder am Kupplungselement (42) anliegt.

11. Getriebe-Antriebseinheit (10) nach einem der vorhergehenden Ansprüche, **dadurch gekennzeichnet, dass** das Kupplungselement (42) und das Getriebezahnrad (40) jeweils einstückig aus Kunststoff gefertigt sind und das Kupplungselement (42) eine deutlich höhere Festigkeit aufweist als das Getriebezahnrad (40), um eine Kriechbelastung bei Dauerbeanspruchung aufzunehmen.

12. Getriebe-Antriebseinheit (10) nach einem der vorhergehenden Ansprüche, **dadurch gekennzeichnet, dass** die Schlingfeder (54) von dem Kupplungselement (42) und dem Getriebezahnrad (40) derart umschlossen ist, dass diese eine Kapselung (74) für eine Lebensdauerfüllung eines Schmiermittels (75) bilden.

13. Getriebe-Antriebseinheit (10) nach einem der vorhergehenden Ansprüche, **dadurch gekennzeichnet, dass** das Kupplungselement (42) und/oder das Getriebezahnrad (40) jeweils einen axialen Anschlag (68, 69) für die Schlingfeder (54) bilden, um diese axial zu fixieren.

14. Getriebe-Antriebseinheit (10) nach einem der vorhergehenden Ansprüche, **dadurch gekennzeichnet, dass** die Enden (66) der Schlingfeder (54) und die Anschläge (82) des Getriebezahnrads (40) und/oder Anschlagsflächen (92) des Kupplungselements (42) bezüglich der Umfangsrichtung (70) gegenüber der Wellenachse (72) geringfügig geneigt sind, um das Kupplungselement (42) bzw. das Getriebezahnrad (40) beim Einwirken eines abtriebsseitigen und/oder antriebsseitigen Drehmoments (86, 85) axial gegen die Schlingfeder (54) zu ziehen.

15. Getriebe-Antriebseinheit (10) nach einem der vorhergehenden Ansprüche, **gekennzeichnet, durch die Verwendung zum Verstellen beweglicher Teile, wie beispielsweise einer Scheibe oder einem Schiebedach, oder als eine Antriebskomponente im Kraftfahrzeug.**

## Claims

1. Transmission drive unit (10) having an electric motor (14) which drives a transmission (30), and having a load torque lock (44) which locks the torques (86) which are applied by an output-side clutch element (42), wherein the load torque lock (44) comprises a wrap spring (54) which is arranged on/in a rotationally fixed shaft (50, 52), and the wrap spring (54) engages in a transmission gear wheel (40) which is driven on the drive side by a rotor shaft (16) of the electric motor (14), **characterized in that** the ends (66) of the wrap spring (54) are shaped in the circumferential direction (70) in such a way that they form sprung damping elements (90) which absorb the energy when the clutch element (42) locks, which is caused by a sudden stop of a part which is to be adjusted by means of the transmission drive unit (10).

2. Transmission drive unit (10) according to Claim 1, **characterized in that** the clutch element (42) is mounted on/in the rotationally fixed shaft (50, 52) and engages with an axial and/or radial projection (60) in a corresponding recess (62) in the transmission gear wheel (40).

3. Transmission drive unit (10) according to one of Claims 1 or 2, **characterized in that** the wrap spring (54) is arranged axially between the clutch element (42) and the transmission gear wheel (40).

4. Transmission drive unit (10) according to one of the preceding claims, **characterized in that** the transmission gear wheel (40) is mounted on the clutch element (42).

5. Transmission drive unit (10) according to one of the preceding claims, **characterized in that** the transmission (30) is embodied at least partially as a worm gear (28) and is embodied at least approximately free of self-locking and has a high level of efficiency.

6. Transmission drive unit (10) according to one of the preceding claims, **characterized in that** the transmission gear wheel (40) is embodied as a worm gear (36) which meshes with a worm (34) of the rotor shaft (16).

7. Transmission drive unit (10) according to one of the preceding claims, **characterized in that** the wrap spring (54) is wound in a helical shape around/in the rotationally fixed shaft (50, 52) and has ends (66) which protrude radially from the shaft (50, 52) and engage in the recess (62) in the transmission gear wheel (40).

8. Transmission drive unit (10) according to one of the preceding claims, **characterized in that** the transmission gear wheel (40) has at least one stop (82) with respect to the circumferential direction (70), which stop (82) presses, during the function of a drive-side torque (85), at least one of the ends (66) against the projection (60) of the clutch element (42) in such a way that the wrap spring (54) rotates with the transmission gear wheel (40) and the clutch element (42) with respect to the shaft (50, 52).

9. Transmission drive unit (10) according to one of the preceding claims, **characterized in that** the projection (60) of the clutch element (42) engages axially and/or radially between the ends (66) of the wrap spring (54), and during the action of an output-side torque (86) twists at least one of the ends (66) with respect to the shaft (50, 52) in such a way that the wrap spring (54) is clamped against the shaft (50, 52) and locks the torque (86) which is acting on the output side.

10. Transmission drive unit (10) according to one of the preceding claims, **characterized in that** the clutch element (42) and the transmission gear wheel (40) support one another axially and/or radially, wherein for this purpose in particular a ring element (64, 65), which bears axially and/or radially against the transmission gear wheel (40) or on the clutch element (42), is integrally formed onto the clutch element (42) and/or onto the transmission gear wheel (40).

11. Transmission drive unit (10) according to one of the preceding claims, **characterized in that** the clutch element (42) and the transmission gear wheel (40) are each fabricated in one piece, and the clutch element (42) has a significantly greater strength than the transmission gear wheel (40), in order to absorb creeping stress in the case of fatigue loading.

12. Transmission drive unit (10) according to one of the preceding claims, **characterized in that** the wrap spring (54) is surrounded by the clutch element (42) and the transmission gear wheel (40) in such a way that they form an encapsulation (74) for a service life filling of a lubricant (75).

13. Transmission drive unit (10) according to one of the preceding claims, **characterized in that** the clutch element (42) and/or the transmission gear wheel (40) each form an axial stop (68, 69) for the wrap spring (54) in order to secure the latter axially.

14. Transmission drive unit (10) according to one of the preceding claims, **characterized in that** the ends (66) of the wrap spring (54) and the stops (82) of the transmission gear wheel (40) and/or stop faces (92) of the clutch element (42) are inclined slightly with respect to the shaft axis (72) in relation to the circumferential direction (70), in order to pull the clutch element (42) or the transmission gear wheel (40) axially against the wrap spring (54) during the action of an output-side and/or drive-side torque (86, 85).

15. Transmission drive unit (10) according to one of the preceding claims, **characterized by** the use for adjusting moving parts such as, for example, a vehicle window or a sunroof or as a drive component in the motor vehicle.

## Revendications

1. Unité d'entraînement de transmission (10) comprenant un moteur électrique (14) qui entraîne une transmission (30) et comprenant un verrouillage de couple de charge (44) qui verrouille les couples (86) introduits par un élément d'accouplement (42) du côté de la sortie, le verrouillage de couple de charge (44) .présentant un ressort enroulé (54) qui est disposé sur/dans un arbre fixé de manière solidaire en rotation (50, 52), et le ressort enroulé (54) venant en prise dans une roue dentée de transmission (40) entraînée du côté de l'entraînement par un arbre de rotor (16) du moteur électrique (14), **caractérisée en ce que** les extrémités (66) du ressort enroulé (54) sont formées dans la direction périphérique (70) de telle sorte qu'elles forment des éléments d'amortissement élastiques (90) qui reçoivent l'énergie lors du blocage des éléments d'accouplement (42) qui est provoqué du fait d'un arrêt brutal d'une partie devant être déplacée au moyen de l'unité d'entraînement de transmission (10).

2. Unité d'entraînement de transmission (10) selon la revendication 1, **caractérisée en ce que** l'élément d'accouplement (42) est supporté sur/dans l'arbre fixé de manière solidaire en rotation (50, 52) et vient en prise avec une saillie axiale et/ou radiale (60) dans un évidement correspondant (62) de la roue dentée de transmission (40).

3. Unité d'entraînement de transmission (10) selon l'une quelconque des revendications 1 ou 2, **caractérisée en ce que** le ressort enroulé (54) est disposé axialement entre l'élément d'accouplement (42) et la roue dentée de transmission (40).

4. Unité d'entraînement de transmission (10) selon l'une quelconque des revendications précédentes, **caractérisée en ce que** la roue dentée de transmission (40) est supportée sur l'élément d'accouplement (42).

5. Unité d'entraînement de transmission (10) selon l'une quelconque des revendications précédentes, **caractérisée en ce que** la transmission (30) est réalisée au moins en partie sous forme de transmission à vis sans fin (28) et est réalisée au moins approximativement sans auto-blocage et présente un haut rendement.

6. Unité d'entraînement de transmission (10) selon l'une quelconque des revendications précédentes, **caractérisée en ce que** la roue dentée de transmission (40) est réalisée sous forme de roue dentée à denture hélicoïdale (36) qui s'engrène avec une vis sans fin (34) de l'arbre de rotor (16).

7. Unité d'entraînement de transmission (10) selon l'une quelconque des revendications précédentes, **caractérisée en ce que** le ressort enroulé (54) est enroulé en spirale autour de/dans l'arbre fixé de manière solidaire en rotation (50, 52) et présente des extrémités (66) qui font saillie radialement depuis l'arbre (50,52) et qui viennent en prise dans l'évidement (62) de la roue dentée de transmission (40).

8. Unité d'entraînement de transmission (10) selon l'une quelconque des revendications précédentes, **caractérisée en ce que** la roue dentée de transmission (40) présente au moins une butée (82) par rapport à la direction périphérique (70), laquelle, lors de l'application d'un couple du côté de l'entraînement (85), presse au moins l'une des extrémités (66) contre la saillie (60) de l'élément d'accouplement (42) de telle sorte que le ressort enroulé (54) tourne avec la roue dentée de transmission (40) et l'élément d'accouplement (42) par rapport à l'arbre (50, 52).

9. Unité d'entraînement de transmission (10) selon l'une quelconque des revendications précédentes, **caractérisée en ce que** la saillie (60) de l'élément d'accouplement (42) vient en prise axialement et/ou radialement entre les extrémités (66) du ressort enroulé (54) et, lors de l'application d'un couple du côté de la sortie (86), au moins l'une des extrémités (66) tourne par rapport à l'arbre (50, 52) de telle sorte que le ressort enroulé (54) se serre contre l'arbre (50, 52) et bloque le couple (86) agissant du côté de la sortie.

10. Unité d'entraînement de transmission (10) selon l'une quelconque des revendications précédentes, **caractérisée en ce que** l'élément d'accouplement (42) et la roue dentée de transmission (40) s'appuient l'une contre l'autre axialement et/ou radialement, un élément annulaire (64, 65) étant notamment formé à cet effet au niveau de l'élément d'accouplement (42) et/ou au niveau de la roue dentée de transmission (40), lequel s'applique axialement et/ou radialement contre la roue dentée de transmission (40) ou contre l'élément d'accouplement (42).

11. Unité d'entraînement de transmission (10) selon l'une quelconque des revendications précédentes, **caractérisée en ce que** l'élément d'accouplement (42) et la roue dentée de transmission (40) sont à chaque fois fabriqués d'une seule pièce en plastique et l'élément d'accouplement (42) présente une solidité nettement plus élevée que celle de la roue dentée de transmission (40), afin de recevoir une charge de fluage lors d'une sollicitation prolongée.

12. Unité d'entraînement de transmission (10) selon l'une quelconque des revendications précédentes, **caractérisée en ce que** le ressort enroulé (54) est entouré par l'élément d'accouplement (42) et la roue dentée de transmission (40) de telle sorte que ceux-ci forment un encapsulage (74) pour un remplissage à vie avec un lubrifiant (75).

13. Unité d'entraînement de transmission (10) selon l'une quelconque des revendications précédentes, **caractérisée en ce que** l'élément d'accouplement (42) et/ou la roue dentée de transmission (40) forment dans chaque cas une butée axiale (68, 69) pour le ressort enroulé (54), afin de fixer celui-ci axialement.

14. Unité d'entraînement de transmission (10) selon l'une quelconque des revendications précédentes, **caractérisée en ce que** les extrémités (66) du ressort enroulé (54) et les butées (82) de la roue dentée de transmission (40) et/ou des surfaces de butée (92) de l'élément d'accouplement (42) sont légèrement inclinées par rapport à la direction périphérique (70) par rapport à l'axe de l'arbre (72), afin de solliciter l'élément d'accouplement (42) ou la roue dentée de transmission (40) lors de l'application d'un couple du côté de la sortie et/ou du côté de l'entraînement (86, 85) axialement contre le ressort enroulé (54).

15. Unité d'entraînement de transmission (10) selon l'une quelconque des revendications précédentes, **caractérisée par** l'utilisation pour le réglage de pièces mobiles, par exemple d'une vitre ou d'un toit coulissant, ou en tant que composant d'entraînement dans un véhicule automobile.
